# EUROPÄISCHE PATENTSCHRIFT

(11) **EP 0 935 557 B1**
(45) Veröffentlichungstag und Bekanntmachung des Hinweises auf die Patenterteilung: **26.04.2000**
(21) Anmeldenummer: 97950072.5
(22) Anmeldetag: 03.11.1997
(51) Int. Cl.: B64C 27/00, B64F 5/00

(54) **VORRICHTUNG ZUM VERMESSEN UND KALIBRIEREN VON ROTORBLATT-STEUERWINKELN UND -STEUERKRÄFTEN**
DEVICE FOR MEASURING AND CALIBRATING THE CONTROL ANGLES AND CONTROL FORCES OF A ROTOR BLADE
DISPOSITIF POUR LA MESURE ET LE CALIBRAGE D'ANGLES DE COMMANDE ET D'EFFORTS DE COMMANDE D'UNE PALE DE ROTOR

(30) Priorität: 07.11.1996 DE 19645942
(43) Veröffentlichungstag der Anmeldung: 18.08.1999
(73) Patentinhaber: ZF Luftfahrttechnik GmbH, 34379 Calden (DE)
(72) Erfinder: BRÜGGEMANN, Detlef, D-34292 Ahnatal (DE); SCHRÖDER, Günter, D-34266 Niestetal (DE); SOMMER, Armin, D-34246 Vellmar (DE)
(74) Vertreter: Zietlow, Karl-Peter
(86) Internationale Anmeldenummer: EP9706048
(87) Internationale Veröffentlichungsnummer: WO9819909

(56) Entgegenhaltungen:
- WO-A-95/14608

## Beschreibung

Die Erfindung betrifft eine Vorrichtung zum Vermessen, Kalibrieren und/oder Eichen von Ansteuer- und Meßeinrichtungen an einer Aufhängung eines durch ein Übertragungsglied insbesondere eine Steuerstange verstellbaren Rotorblatts an einem Rotorkopf eines Hubschraubers oder eines Rotorblattprüfstandes.

Bei Hubschrauberrotoren sind die Steuerwinkel (Anstellwinkel) der einzelnen Rotorblätter zur Veränderung des Auftriebs kollektiv, und zur Steuerung von Nick- und Rollbewegungen des Hubschraubers zyklisch verstellbar. Im allgemeinen werden Vertikalbewegung einer Taumelscheibe unterhalb der Rotorblattebene durch eine bezüglich der Rotorblatt-Drehachse exzentrisch angreifende Steuerstange auf ein Rotorblatt übertragen.

Ebenso wie beim Hubschrauber können bei einem Rotorblattprüfstand die Steuerwinkel an den Rotorblättern kollektiv und zyklisch verändert werden. Beim Rotorblattprüfstand bestehen hohe Anforderungen an die Genauigkeit der vorgegebenen Steuerwinkel da hier beispielsweise auch Abstimm- und Auswuchtarbeiten an Rotorblättern durchgeführt werden. Außerdem muß der Verlauf der Steuerkraft an einem Rotorblatt unter verschiedenen Betriebsbedingungen ermittelt werden können.

Hierzu werden an einem Rotorblattprüfstand spezielle Steuerstangen mit integrierten Steuerkraftaufnehmern eingesetzt. Der Verlauf der Steuerwinkel wird aus einem Signal, das mit der Stellung der Taumelscheibe zusammenhängt, errechnet.

Eine Voraussetzung für die Messungen ist, daß das Stell- und Meßsystem des Prüfstandes geeicht bzw. kalibriert ist.

Bei Hubschraubertypen, bei denen die Steuerstangen nicht direkt am Rotorblatt angreifen, sondern an einer mit dem Rotorkopf verbundenen Rotorblattaufhängung, können sämtliche Eich- und Kalibrierarbeiten direkt an der Rotorblattaufhängung durchgeführt werden, ohne daß hierfür ein Rotorblatt notwendig ist.

Bei anderen Hubschraubertypen greifen die Steuerstangen direkt an den Rotorblättern an. Die Änderung der Anstellwinkel wird durch einen verwindbaren Blattwurzelarm ermöglicht. Eine solche Rotorblattaufhängung ist wie beispielsweise in der DE 28 29 605 beschrieben. Die Vermessung, Eichung oder Kalibrierung des Stell- und Meßsystems der Rotorblattansteuerung kann bei diesen Hubschraubertypen nicht direkt am Rotorkopf durchgeführt werden.

Eine naheliegende Möglichkeit, die Messungen durchzuführen, ist, ein Rotorblatt einzubauen, und die Messungen am Rotorblatt durchzuführen. Dabei treten jedoch verschiedene Probleme auf. Ein Rotorblatt ist toleranzbehaftet und unhandlich. Somit gehen Blattfehler in die Messungen ein. Bedingt durch die aerodynamische Form weist es kaum geeignete Bezugsflächen für ein Lagemeßgerät zur Ermittlung von Steuerwinkeln auf. Um reproduzierbare Ergebnisse zu erzielen muß die Meßposition jeweils sorgfältig ermittelt werden. Das Profil eines Rotorblatts ist im Bereich der Blattwurzel im allgemeinen sehr bauchig und rundlich. Flachere Oberflächen, die sich eher als Bezugsflächen für ein Lagemeßgerät eignen, finden sich erst weiter außen von der Rotordrehachse entfernt. Eine solche Stelle eines Rotorblatts ist unter Umständen nur schwer über eine Leiter oder ein Gerüst zugänglich. An einer solchen von der Rotorblattaufhängung entfernten Stelle, können sich außerdem Verformungen des Rotorblatts durch Gewichtskräfte oder äußere Kräfte, wie z. B. Windeinwirkung, negativ auswirken.

Bei bestimmten Hubschraubertypen sind die Rotorblätter unter Vorspannung eingebaut, so daß eine Kraft auf die Steuerstangen wirkt. Die Vorspannung im Ruhezustand ist so gewählt, daß das Stellsystem bei Betriebsbedingungen, wenn zusätzlich aerodynamische und Trägheitskräfte wirken, weniger stark belastet wird. Eine Kalibrierung des Steuerkraftaufnehmers in Einbauposition ist somit unmöglich. Ebenso ist es auch nicht möglich, den Fliehkrafteinfluß auf die Steuerkraftaufnehmer bei Drehung zu kompensieren. Werden die Messungen auf diese Weise durchgeführt, sind sie außerdem auch sehr zeitintensiv.

Der vorliegenden Erfindung liegt daher die Aufgabe zugrunde, die Messungen zu vereinfachen. Es soll außerdem eine Kalibrierung der Steuerkraftaufnehmer in Einbauposition und ein Nullabgleich unter Fliehkrafteinwirkung ermöglicht werden.

Erfindungsgemäß wird dies dadurch erreicht, daß an der Position des Rotorblatts eine Vorrichtung mit der selben Geometrie der Anschlußsstellen und der selben räumlichen Lage der Anschlußstellen zueinander vorgesehen wird. Die Anschlußstelle an der Steuerstange ist relativ zur Anschlußsstelle am Rotorkopf beweglich, wobei diese Relativbewegung der Relativbewegung der Anschlußstellen eines Rotorblatts entspricht. Zur Durchführung der Messungen ist kein Rotorblatt mehr erforderlich. Somit werden die Meßfehler aus den Toleranzen und der Verformung des Rotorblatts vermieden. Neben einer erheblichen Zeitersparnis sind auch die Meßergebnisse besser reproduzierbar.

In der erfindungsgemäßen Vorrichtung ist ein Steuerstangenanschlußarm vorgesehen, an welchem die Steuerstange angelenkt wird, der relativ zu einem mit dem Rotorkopf verbindbaren Anschlußblock bezüglich einer vom Rotorkopf nach außen weisenden Achse spannungsfrei verdrehbar ist. Damit wird der Vorteil erzielt, daß keine Vorspannkraft auf die Steuerstange wirkt. Dies ist eine Voraussetzung für die Kalibrierung des Steuerstangen-Kraftmeßsystems in Einbauposition. Bei drehendem Rotor wird auf diese Weise ein Nullabgleich unter Fliehkrafteinwirkung ermöglicht. Auf dem Steuerstangenanschlußarm ist eine geeignete geometrische Ausformung vorhanden, die als Bezug für eine Lagemeßgerät einsetzbar ist.

Bei einer vorteilhaften Ausführung dieser verdrehbaren Lagerung ist der Steuerstangenanschlußarm auf einer Achse befestigt, die in einer im Anschlußblock befestigten Lagerhülse mit sehr geringem Spiel drehbar ist. Auf diese Weise lassen sich ein sehr geringes Spiel der ganzen Anordnung bei gleichzeitig geringem Gewicht erzielen. Durch das geringe Gewicht werden die Trägheitskräfte bei drehendem Rotor gering gehalten. Naheliegend ist auch jede andere Art der Lagerung des Steuerstangenanschlußarms im Anschlußblock, beispielsweise durch Wälzlager.

Mit der im Anspruch 3 beschriebenen Ausgestaltung der Erfindung wird es möglich, der Steuerstange mittels Eichgewichten eine definierte Längskraft aufzuprägen. Anhand dieser Kraft kann das Steuerstangen-Kraftmeßsystem mit dem in der Steuerstange integrierten Steuerkraft-Aufnehmern in Einbauposition kalibriert werden. Entscheidend dabei ist, daß die Eichgewichte an einer Stelle außerhalb der Drehachse der Steuerstangen im Anschlußblock angebracht werden können.

Die Vorrichtung kann ohne den Hebelarm und Eichgewichte auch bei laufendem Rotor eingesetzt werden, um einen Nullabgleich des Steuerstangen-Kraftmeßsystems in Einbauposition unter Fliehkrafteinwirkung durchzuführen.

Eine einfache Form der geometrischen Ausformung ist eine ebene Auflagefläche für das Lagemeßgerät (z. B. Winkelwasserwaage).

Schließlich kann die Vorrichtung außer an einem Rotorblattprüfstand auch direkt am Hubschrauber zur Vermessung und zur Kontrolle der Steuerwinkel eingesetzt werden. Darüber hinaus kann die Erfindung auch an anderen aerodynamischen oder hydrodynamischen verstellbaren Rotorsystemen verwendet werden, wie beispielsweise einem Rotor einer Windkraftanlage oder einem Verstellpropeller oder einer verstellbaren Schiffsschraube.

Im folgenden wird die Erfindung mit Bezug auf die beiliegenden Zeichungen näher erläutert.

Es zeigen:
- Fig. 1:: Eine erfindungsgemäße Vorrichtung in der Draufsicht, wobei die Zeichnungsebene senkrecht zur nicht dargestellten Rotordrehachse verläuft,
- Fig. 2:: Eine erfindungsgemäße Vorrichtung in einer Seitenansicht mit skizziertem Rotorkopf 38,
- Fig. 3:: Eine Prinzipskizze zur Erläuterung des Kalibrierverfahrens für das Steuerstangen-Kraftmeßsystem und der kinematischen Zusammenhänge.

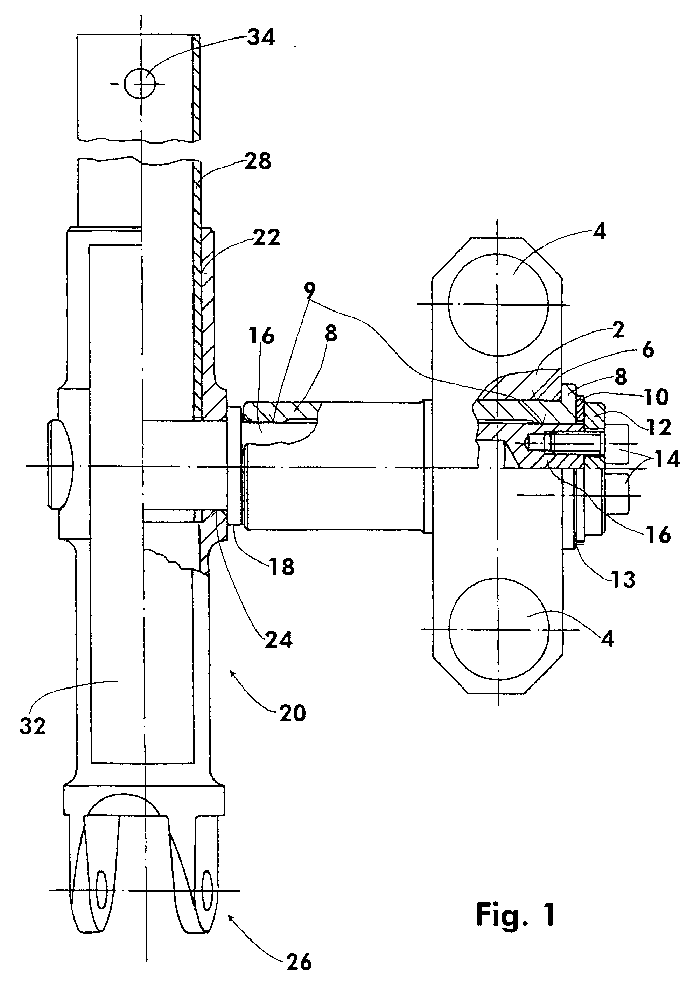

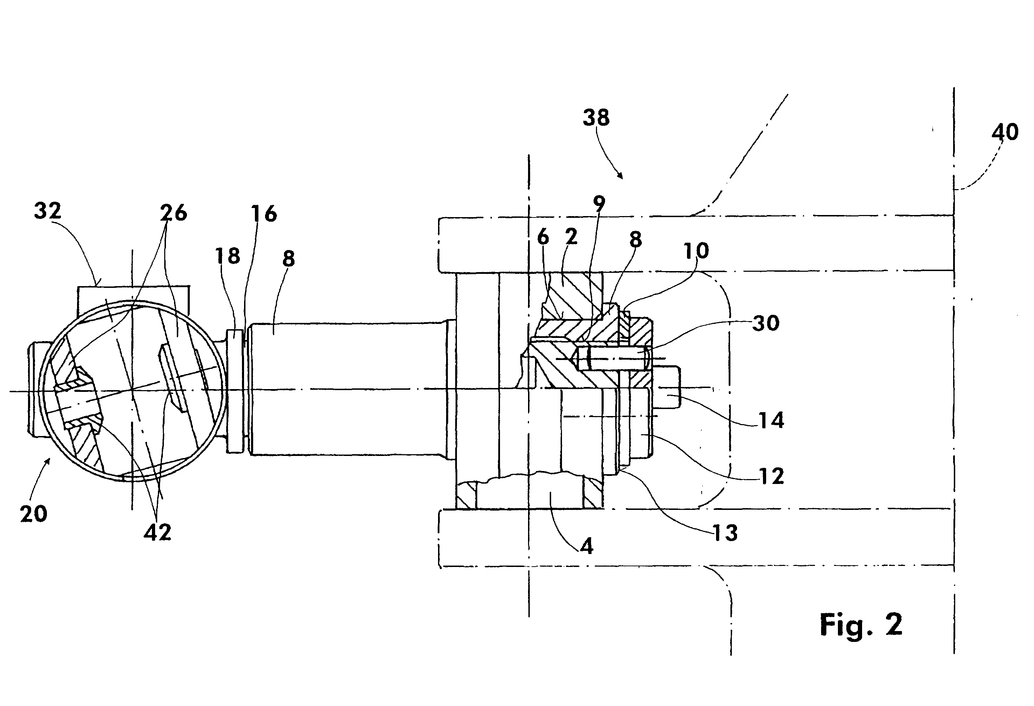

In Fig. 1 ist der Anschlußblock 2 mit den Befestigungsbohrungen 4 zu erkennen. Mittels nicht dargestellter Bolzen wird hierüber die Verbindung zum in Fig. 2 gestrichelt dargestellten Rotorkopf 38 hergestellt. In der Aufnahmebohrung 6 des Anschlußblocks 2 ist die Lagerhülse 8 fixiert. Die Paßbohrungen 9 der Lagerhülse 8 dienen als Lager für die Achse 16. Axiale Bewegungen der Achse 16 in der Lagerhülse 8 werden durch den Bund 18 und die Anlaufscheibe 10 verhindert. Es ist ein geringes Axialspiel vorhanden, womit ein Klemmen verhindert wird. Bei Rotordrehung bewirkt die Fliehkraft, die auch auf die Achse 16 wirkt, daß die Anlaufscheibe 10 spielfrei zwischen dem Deckel 12 und der Stirnfläche 13 der Lagerhülse 8 liegt. Die Anlaufscheibe 10 ist durch den Deckel 12 gesichert, welcher mit den Schrauben 14 und den in Fig. 2 erkennbaren Paßstiften 30 an der Achse 16 befestigt ist. Die Anlaufscheibe 10 ist vorzugsweise aus einem geeigneten Buntmetall gefertigt, wodurch bessere Lagereigenschaften erzielt werden.

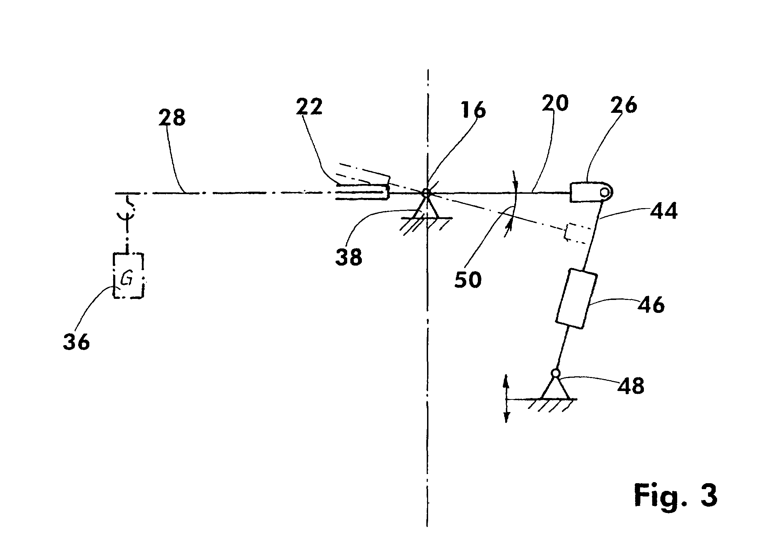

Die Achse 16 sitzt in der Querbohrung 24 des Steuerstangenanschlußarms 20 und ist dort durch eine entsprechende Preßpassung und/oder Verklebung fixiert. Der Steuerstangenanschlußarm 20 weist einen Steuerstangenanschluß auf, der hier als Gelenkgabel 26 ausgeführt ist. Auf der Oberseite weist der Steuerstangenanschlußarm 20 eine ebene Auflagefläche 32 für ein Lagemeßgerät (z. B. Winkelwasserwaage) auf (Fig. 1, 2). Die Aufnahmebohrung 22 im Steuerstangenanschlußarm 20 dient zur Aufnahme eines rohrförmigen Hebelarms 28, welcher eine Bohrung 34 zur Befestigung eines Eichgewichts 36 (Fig. 3) aufweist.

In Fig. 2 ist die Anbauposition der Vorrichtung am gestrichelt dargestellten Rotorkopf 38 erkennbar. Die mit 40 bezeichnete Linie entspricht der Rotordrehachse. Die Gelenkgabel 26 mit den Hülsen 42 nimmt die in Fig. 3 skizzierte Steuerstange 44 auf.

Anhand Fig. 3 soll das Kalibrierverfahren für das Steuerstangen-Kraftmeßsystem und die kinematischen Zusammenhänge erläutert werden: Die Gewichtskraft des Eichgewichts 36 wirkt über den Hebelarm 28 und den Steuerstangenanschlußarm 20 auf die Steuerstange 44 mit integriertem Kraftaufnehmer 46. Aus dem Hebelverhältnis läßt sich die tatsächliche Längskraft in der Steuerstange 44 errechnen. Diese wird als Bezugsgröße zur Kalibrierung des Steuerstangen-Kraftmeßsystems benutzt.

Die Steuerstange 44 überträgt die Vertikalbewegungen der Taumelscheibe 48 auf die Gelenkgabel 26 des Steuerstangenanschlußarms 20. Der Steuerstangenanschlußarm 20 ist um die Achse 16 relativ zum Rotorkopf 38 drehbar. Der Neigungswinkel 50 des Steuerstangenanschlußarms, der sich bei dieser Drehung einstellt, ist die Meßgröße für den Rotorblatt-Steuerwinkel.

### Bezugszeichen

- 2: Anschlußblock (zum Rotorkopf 38)
- 4: Befestigungsbohrungen
- 6: Aufnahmebohrung
- 8: Lagerhülse
- 9: Paßbohrungen
- 10: Anlaufscheibe (aus Buntmetall)
- 12: Deckel
- 13: Stirnfläche der Lagerhülse 8
- 14: Schrauben
- 16: Achse
- 18: Bund
- 20: Steuerstangenanschlußarm
- 22: Aufnahmebohrung
- 24: Querbohrung
- 26: Gelenkgabel
- 28: Hebelarm
- 30: Paßstift
- 32: Auflagefläche
- 34: Bohrung
- 36: Eichgewicht
- 38: Rotorkopf
- 40: Rotordrehachse
- 42: Hülsen
- 44: Steuerstange
- 46: Kraftaufnehmer
- 48: Taumelscheibe
- 50: Meßgröße für Steuerwinkel

## Patentansprüche

1. Vorrichtung zum Vermessen, Kalibrieren und/oder Eichen von Ansteuer- und Meßeinrichtungen an einer Aufhängung eines durch eine Steuerstange (44) verstellbaren Rotorblatts an einem Rotorkopf (38), dadurch **gekennzeichnet,** daß die Vorrichtung anstelle des Rotorblattes vorsehbar ist, und die Geometrie der rotorkopfseitigen und steuerstangenseitigen Anschlußstellen (4, 26) der Vorrichtung, sowie die räumliche Lage der Anschlußstellen zueinander, der Geometrie der Anschlußstellen des Rotorblatts, sowie der räumlichen Lage der Anschlußstellen des Rotorblatts zueinander entsprechen, und außerdem die steuerstangenseitige Anschlußstelle (26) relativ zur rotorkopfseitigen Anschlußstelle (4) beweglich ist, und die dadurch mögliche Relativbewegung der Relativbewegung der Anschlußstellen an einem Rotorblatt entspricht, wobei die Vorrichtung einen Steuerstangenanschlußarm (20) aufweist, der relativ zu einem mit dem Rotorkopf (38) verbindbaren Anschlußblock (2) bezüglich einer vom Rotorkopf (38) nach außen weisenden Achse (16) spannungsfrei verdrehbar ist und auf dem Steuerstangenanschlußarm (20) eine geeignete geometrische Ausformung (32) vorhanden ist, die als Bezug für ein Lagemeßgerät einsetzbar ist.

2. Vorrichtung nach Anspruch 1, dadurch **gekennzeichnet,** daß der Steuerstangenanschlußarm (20) an der Achse (16) befestigt ist, die in einer, im Anschlußblock (2) befestigten Lagerhülse (8) mit sehr geringem Spiel drehbar ist.

3. Vorrichtung nach einem der Ansprüche 1 oder 2, dadurch **gekennzeichnet,** daß der Steuerstangenanschlußarm (20) vorzugsweise auf der der steuerstangenseitigen Anschlußstelle (26) gegenüberliegenden Seite durch einen Hebelarm (28) mit einer Befestigungsmöglichkeit für ein Eichgewicht (36) verlängerbar ist, um über die Hebelwirkung eine definierte Längskraft in der Steuerstange (44) zur Kalibrierung eines Steuerstangen-Kraftmeßsystems zu erzeugen.

4. Vorrichtung nach einem der Ansprüche 1 bis 3, dadurch **gekennzeichnet,** daß die geometrische Ausformung eine ebene Auflagefläche (32) ist.

## Claims

1. Device for measuring, calibrating and/or gauging control and measuring devices on a suspension of a rotor blade, which is adjustable by means of a control rod (44), on a rotor head (38), characterized in that the device is providable instead of the rotor blade, and the geometry of the rotor-head-side and control-rod-side connection points (4, 26) of the device as well as the spatial position of the connection points relative to one another correspond to the geometry of the connection points of the rotor blade as well as the spatial position of the connection points of the rotor blade relative to one another, and moreover the control-rod-side connection point (26) is movable relative to the rotor-head-side connection point (4), and the consequently possible relative motion corresponds to the relative motion of the connection points on a rotor blade, wherein the device comprises a control rod connection arm (20), which is twistable relative to a connection block (2), which is connectable to the rotor head (38), in a stress-free manner in relation to an axle (16) directed outwards from the rotor head (38), and there is provided on the control rod connection arm (20) a suitable geometric configuration (32), which is usable as a reference for a position measuring instrument.

2. Device according to claim 1, characterized in that the control rod connection arm (20) is fastened to the axle (16), which is rotatable with very little play in a bearing bush (8) fastened in the connection block (2).

3. Device according to one of claims 1 or 2,
characterized in that the control rod connection arm (20) preferably at the opposite side to the control-rod-side connection point (26) is extendable by means of a lever arm (28) with a fastening facility for a standard weight (36) in order to generate via the lever action a defined longitudinal force in the control rod (44) for calibrating a control rod force measuring system.

4. Device according to one of claims 1 to 3,
characterized in that the geometric configuration is a flat supporting surface (32).

## Revendications

1. Dispositif pour mesurer, calibrer et/ou étalonner des dispositifs de commande et de mesure, monté sur une suspension d'une pale de rotor d'une tête de rotor (38), réglable au moyen d'une tige de commande (44), **caractérisé en ce que** le dispositif peut être monté sur la pale de rotor et la géométrie des points d'ancrage (4, 26) du dispositif, du côté de la tête du rotor et du côté de la tige de commande ainsi que les positions spatiales respectives des points d'ancrage, correspondent à la géométrie des points d'ancrage de la pale du rotor ainsi qu'aux positions spatiales respectives des points d'ancrage de la pale du rotor, et en ce qu'en outre le point d'ancrage (26) disposé du côté de la tige de commande est mobile par rapport au point d'ancrage (4) disposé du côté du rotor, rendant ainsi possible le mouvement relatif des points d'ancrage d'une pale de rotor, ce dispositif comportant un bras d'accouplement d'une tige de commande (20) qui peut être pivotée par rapport à un bloc d'ancrage (2) lié à la tête de rotor (38), libre de toutes tensions, selon un axe (16) dirigé vers l'extérieur de la tête du rotor (38), et en ce qu' il comporte une déformation géométrique appropriée (32) ménagée sur le bras d'accouplement de la tige de commande (20), agencée pour recevoir un appareil de mesure de position.

2. Dispositif selon la revendication 1, **caractérisé en ce que** le bras d'accouplement d'une tige de commande (20) est fixé sur l'axe (16) qui est rotatif avec un très faible jeu dans une douille de palier (8) montée dans le bloc d'ancrage (2).

3. Dispositif selon l'une des revendications 1 ou 2, **caractérisé en ce que** le bras d'accouplement d'une tige de commande (20) peut être prolongé par un bras de levier (28) comportant un moyen de fixation d'un poids d'étalonnage (36), de préférence du côté opposé au côté du point d'ancrage (26) de la tige de commande, pour générer à l'aide de l'effet de levier une force longitudinale définie dans la tige de commande (44) pour le calibrage d'un système tige de commande-dispositif de mesure de force.

4. Dispositif selon l'une des revendications 1 à 3, **caractérisé en ce que** la déformation géométrique est constituée d'une surface d'appui plane (32).
